# EUROPÄISCHE PATENTSCHRIFT

(11) **EP 1 843 155 B1**
(45) Veröffentlichungstag und Bekanntmachung des Hinweises auf die Patenterteilung: **29.06.2016**
(21) Anmeldenummer: 07005043.0
(22) Anmeldetag: 12.03.2007
(51) Int. Cl.: G01N 30/60, B01J 20/282, B01J 20/30, B01J 20/28

(54) **HERSTELLUNG VON MONOLITHISCHEN TRENNSÄULEN**
PRODUCTION OF MONOLITHIC SEPARATING COLUMNS
FABRICATION DE COLONNES DE SÉPARATION MONOLITHIQUES

(30) Priorität: 07.04.2006 EP 06007395; 20.04.2006 EP 06008141
(43) Veröffentlichungstag der Anmeldung: 10.10.2007
(73) Patentinhaber: Merck Patent GmbH, 64293 Darmstadt (DE)
(72) Erfinder: Lubda, Dieter, Dr., 64625 Bensheim (DE); Cabrera Perez, Karin, Dr., 63303 Dreieich (DE); Kreher, Klaus, 64839 Muenster (DE); Mcllwrick Roderick, Charles, Dr., 64658 Fuerth/Odenwald (DE)

(56) Entgegenhaltungen:
- EP-A1- 1 629 887
- WO-A-01/55713
- WO-A-01/58562
- WO-A-01/77660
- WO-A-2004/064974
- US-A- 4 810 674
- US-A- 4 862 836
- US-A1- 2004 000 522
- LUBBAD S ET AL: "Micropreparative fractionation of DNA fragments on metathesis-based monoliths: influence of stoichiometry on separation" JOURNAL OF CHROMATOGRAPHY A, ELSEVIER, AMSTERDAM, NL, Bd. 959, Nr. 1-2, 14. Juni 2002 (2002-06-14), Seiten 121-129, XP004360281 ISSN: 0021-9673

## Beschreibung

Die vorliegende Erfindung betrifft ein Verfahren zur Herstellung von monolithischen Trennsäulen unter Einsatz von monolithischen Formkörpern deren Durchmesser durch Abschleifen verringert wird.

### Stand der Technik -

Durch die Entwicklung von miniaturisierten Synthesevorrichtungen, in denen mit kleinsten Eduktmengen chemische Reaktionen durchgeführt werden können, sind auch die Anforderungen an die entsprechenden Analyseeinrichtungen gestiegen, um die Auftrennung geringster Stoffmengen zu ermöglichen.

Ein wesentlicher Vorteil von Trennsäulen mit kleinerem Durchmesser ist die Möglichkeit deutlich geringere Substanzmenge delektieren zu können. Eine Trennsäule mit 3 mm Durchmesser hat eine um den Faktor 2.35 höhere Detektionsempfindlichkeit gegenüber einer konventionellen Säule mit einem Durchmesser von 4.6 mm (berechnet nach F= (4.6/3)²)

Es werden daher in der chromatographischen Trenntechnik immer häufiger Trennsäulen mit kleinerem Durchmesser als die Standardprodukte (4,6 mm Innendurchmesser) eingesetzt. Aber auch in Verbindung mit üblicherweise eingesetzten Vorrichtungen weist die Verwendung von Säulen mit kleinerem Durchmesser Vorteile auf, da sie geringere Mengen an Lösungsmittel erforderlich machen. Dieses ermöglicht auch deren Einsatz in Verbindung mit massenselektiver Detektion (LC/MS) ohne einen Teil der mobilen Phase vor dem Eingang in den MS-Detektor heraussplitten zu müssen.

Monolithische Trennsäulen können infolge ihrer großen Permeabilität bei gleichzeitig hoher Trennleistung für chromatographische Trennungen mit erhöhten Flussraten eingesetzt werden. Hierin besteht der eigentliche Vorteil bei der Verwendung von monolithischen Trennsäulen gegenüber anderen Trennsäulen. Bei Verwendung von Trennsäulen mit kleineren Durchmessern können zusätzlich noch höhere Detektionsempfindlichkeiten erzielt werden.

Zur Herstellung von anorganischen porösen Materialien in Form von monolithischen Trennsäulen, insbesondere von entsprechenden Säulen basierend auf Silicagelen, sind verschiedene Verfahren bekannt. Wie auch in EP 0 710219 B1 oder WO 98/29350 beschrieben, wird bevorzugt nach dem Sol-Gel-Verfahren gearbeitet. Als Sol-Gel-Methode werden weitverbreitete Verfahren bezeichnet, bei denen man zunächst polymerisierbare niedermolekulare Spezies erzeugt und schließlich über Polymerisatiorisreaktionen aggregierte oder polymerisierte Materialien erhält. Die Söl-Gel-Methode eignet sich u. a. zur Anwendung bei der Hydrolyse von Metallalkoholaten, Metallchloriden, Metallsalzen oder Kombinationsverbindungeh, die in der Regel Carboxyl- oder beta-Diketon-Liganden enthalten. Ein entsprechendes Verfahren wird auch in EP 0 363 697 beschrieben, worin die Lösung eines Metallälkoholats gemeinsam mit einem organischen Polymer als Porenbildner einem Hydrolyseprozess aussetzt wird. Die folgende Polykoridensation führt schließlich zu einer Phasentrennung mit einer silikatreichen Phase und einer wässrigen organischen Phase mit dem gelösten Polymer . Die nach diesem Verfahren-hergestellten Materialien zeichnen sich durch verbundene offene Poren mit enger Porengrößenverteilung aus.

Um mit dem Sol-Gel-Verfahren eine monolithische Trennsäule herzustellen, wird ein Sol in eine Form, z. B. ein Rohr, aus einem geeigneten Material mit einem Innendurchmesser von beispielsweise 6 mm, gegeben. Hierdurch wird der spätere Durchmesser des entstehenden Monolithen festgelegt, der sich durch Schrumpfung ergibt. Erfahrungsgemäß beträgt die Schrumpfung etwa 15 % des ursprünglichen Durchmessers.

In WO 01/58562 wird die Herstellung monolithischer Trennsaülen unter Verwendung eines Sol-Gel Verfahren beschrieben.

Es hat sich nun gezeigt, dass das oben beschriebene Sol-Gel Verfahren bei der Herstellung von Monolithen mit geringerem Durchmesser, insbesondere Durchmessern von kleiner ca. 5 mm, zu Produkten führt, die keine optimalen chromatographischen Trennleistungen aufweisen.

Neben den anorganischen monolithischen Chromatographiesäulen haben sich in den letzten Jahren immer mehr organische monolithische Säulen etabliert, da sie unter bestimmten Bedingungen bessere Eigenschaften aufweisen als die üblicherweise eingesetzten anorganischen Trennsäulen. Bei den organischen monolithischen Säulen handelt es sich bevorzugt um stark quervernetzte, harte organische Polymergele. Auch diese Materialien werden bei ihrer Herstellung typischerweise in Formen, wie z.B. Rohre einpolymerisiert. Verfahren zur Herstellung organischer monolithischer Polymere sind dem Fachmann bekannt. Die Herstellung kann beispielsweise ähnlich erfolgen wie in F. Svec und J.M. Frechet (1992).Anat. Chem. 64, Seiten 820 - 822, und S. Hjerten et al. (1989) J. Chromatogr. 473, Seiten 273 - 275, oder WO 2005116095. Eine andere Möglichkeit zur Herstellung organischer monolithischen Formkörper ist die Herstellung eines organischen, polymeren Abdrucks eines anorganischen porösen Formkörpers, der nach der Polymerisation der organischen Monomere heräusgelöst wird. Entsprechende Verfahren sind in den Patentanmeldungen EP 0 366 252 A und DE 199 46 674 A1 beschrieben.

### Aufgabenstellung

Aufgabe der vorliegenden Erfindung ist es daher, Trennsäulen zur Verfügung zu stellen, die es ermöglichen, auch geringe Mengen an Produktgemisch mit größter Empfindlichkeit chromatographisch aufzutrennen. Es ist aber auch Aufgabe der vorliegenden Erfindung, Trennsäulen insbesondere mit kleinerem Durchmesser zur Verfügung zu stellen, durch die es möglich ist, Trennungen mit größerer Empfindlichkeit durchzuführen, so dass auch geringste Verunreinigungen besser oder überhaupt detektiert werden können.

Darüber hinaus ist es wünschenswert, verbesserte Trennsäulen herzustellen, die es ermöglichen, die chromatographische Trennung mit der Massenspektrometrie als Detektionstechnik zu koppeln und in einer einzigen Anlage durchzuführen, weil diese beiden Methoden sich sehr gut ergänzen. Da Massenspektrometriegeräte im allgemeinen mit nur geringen Flussraten betrieben werden können, ist es wünschenswert, durch die vorliegende Erfindung Trennsäulen mit geringem Durchmesser zur Verfügung zu stellen, die sich mit diesen Geräten kombinieren lassen und trotz kleinerem Durchmesser zu einer verbesserte Auftrennung führen.

Die Aufgabe der vorliegenden Erfindung ist es daher, ein preiswertes, in einfacher Weise durchführbares Verfahren zur Herstellung von monolithschen Trennsäulen zur Verfügung zu stellen, wodurch Trennsäulen erhalten werden, die über den gesamten Säulenquerschnitt homogene Eigenschaften aufweisen, so dass in jedem Volumenelement der hergestellten Säulen eine möglichst gleiche Trennleistung erzielt wird.

Die Aufgabe wird durch ein Verfahren gelöst, in dem in einem ersten Schritt monolithische Formkörper bereit gestellt werden, der im folgenden Schritt durch Abschleifen von der äußeren inhomogenen Schicht befreit wird. Zu diesem Zweck werden dünne Schichten von wenigen Mikrometern Dicke von außen abgeschliffen. Es kann zur Verbesserung der Eigenschaften ausreichend sein, wenn durch das Abschleifen der Durchmesser der Formkörper um 5 µm verringert wird. Üblicherweise wird durch einen Schleifschritt der Durchmesser auf das gewünschte Maß, zumindest aber um ≥ 20 µm reduziert.

### Lösung der erfindungsgemäßen Aufgabe,

Die Ursache dafür, dass insbesondere monolithische Chromatographiesäulen mit kleineren Durchmessern häufig keine optimalen Trennleistungen zeigen scheint im zunehmenden Einfluss des Randbereichs des Monolithen zu liegen.

Bei Silica- Monolithen treten z.B. im Randbereich Domänen aus verdichtetem Kieselgel auf, die sich bei Verringerung des Durchmessers verstärkt negativ auf das Trennergebnis auswirken können.

Wie Untersuchungen gezeigt haben, weisen die Randbereiche eine andere Struktur auf als weiter innen liegende Volumenelemente des gebildeten Monolithen. Während sich im Inneren ein dreidimensionales Netzwerk aufbaut, zeigen sich im Randbereich verdichtete Domänen von Kieselgel mit deutlich verminderter Porosität, was einen Einfluss auf die Trennleistung und Peaksymmetrie hat. Mit REM-Aufnahmen konnte gezeigt werden, dass die äußere Kieselgelschicht der monolithischen Säule inhomogen aufgebaut ist. Durch den Kontakt des Sols mit der Innenoberfläche des Gelierrohres kommt es zu einer anderen Kieselgelstruktur als im Inneren der Säule. Es bilden sich Domänen an der äußeren Oberfläche mit einer extrem dichten Kieselgelschicht, die nicht die klassische Porenstruktur zeigt wie im Inneren des Monolithen.

Überraschend wurde gefunden, dass es möglich ist, aus nach den üblichen Verfahren in Gelierformen hergestellten monolithischen Formkörpern entsprechende Säulen mit verringerten Durchmessern, beispielsweise von 3 oder 2 mm oder weniger, herzustellen, indem das äußere Material, d.h. die Aussere Mantelschicht des Formkörpers, in einem geeigneten Abschleifverfahren abgeschliffen wird. Dieses kann sowohl ein spitzenloses Abschleifverfahren als auch ein anderes Verfahren sein, bei dem unter auf das empfindliche Material angepassten Bedingungen bevorzugt stufenweise dünne äußere Schichten von dem jeweiligen monolithischen Formkörper abgetragen werden können.

Die Lösung der vorliegenden Aufgabe erfolgt daher durch bevorzugt mehrmaliges, stufenweises Abschleifen von typischerweise ca. 0.01 bis 0.2mm Schichten des Formkörpers bis auf den gewünschten Durchmesser.

### Gegenstand der Erfindung

Gegenstand der vorliegenden Erfindung ist ein Verfahren zur Herstellung monolithischer Trennsäulen durch
a) Bereitstellen eines porösen monolithischen Formkörper, im Sol-Gel Verfahren, der inhomogene Randbereiche aufweist
b) Reduktion des Durchmessers des Formkörpers um mindestens 5 µm durch ein- oder mehrfaches Abschleifen der äußeren Mantelschicht

Besonders geeignet ist das erfindungsgemäße Verfahren für poröse monolithische Formkörper, die in einer Gelierform hergestellt wurden.

In einer bevorzugten Ausführungsform wird im Anschluss an Schritt b) in einem Schritt c) der abgeschliffene Formkörper flüssigkeitsdicht ummantelt.

In einer bevorzugten Ausführungsform wird in Schritt b) der Durchmesser des Formkörpers in einem spitzenfreien Abschleifprozess reduziert.

In einer anderen bevorzugten Ausführungsform wird in Schritt b) der Durchmesser des Formkörpers mit Hilfe von rotierenden Schleifscheiben. verringert.

In einer anderen bevorzugten Ausführungsform wird in Schritt b)der Durchmesser des Formkörpers durch Rundschleifen zwischen Spitzen reduziert.

In einer anderen bevorzugten Ausführungsform wird in Schritt b) der Durchmesser des Formkörpers auf einer Drehmaschine durch Drehen zwischen Spitzen reduziert.

In einer bevorzugten Ausführungsform wird in Schritt b) der Durchmesser des Formkörpers stufenweise um insgesamt 0.1 bis 3 mm reduziert.

In einer bevorzugten Ausführungsform wird in Schritt a) ein monölithischer Formkörper mit einem Durchmesser zwischen 4 und 8 mm eingesetzt.

### Abbildungen

Abildung 1 zeigt schematisch ist das Grundprinzip des "spitzenlose Schleifens".

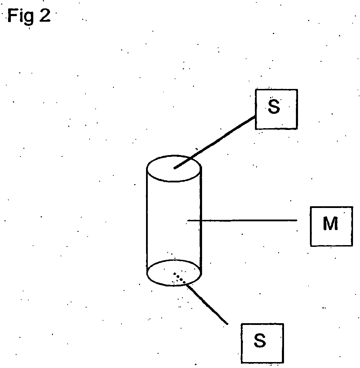

Abbildung 2 zeigt einen zylindrischen Formkörper mit den beiden Stirnseiten S und der Mantelfläche M.

### Ausführliche Beschreibung der Erfindung

Die in dem erfindungsgemäßen Verfahren eingesetzten Formkörper sind Formkörper, die inhomogene Randbereiche aufweisen, insbesondere solche, die in einer Form, der sogenannten Gelierform, hergestellt wurden. Diese Gelierform gibt die Größe und Form des herzustellenden monolithischen Formkörpers vor. Der Begriff "Gelierform" wird dabei unabhängig davon verwendet welches Herstellverfahren eingesetzt wird, d.h. ob der Formkörper z.B. durch ein Sol-Gel-Verfahren, andere Polykondensations- oder Polymerisationsverfahren oder beispielsweise durch Zusammensintern hergestellt wird. Beispielsweise ist die Gelierform zur Herstellung von säulenförmigen Formkörpern typischerweise ein Rohr, das auf einer oder zwei Seiten verschlossen werden kann.

Formkörper mit inhomogenen Randbereichen sind Formkörper, deren äußere Schicht inhomogen ist bzw. eine andere Struktur aufweist als die Bereiche im Inneren des Formkörpers. Inhomogene Randbereiche können beispielsweise durch die Herstellung des Formkörpers entstehen (z.B. wie oben erläutert bei der Herstellung in einer Gelierform) oder durch nachträgliche Behandlung des Formkörpers (z.B. thermische oder mechanische Behandlung).

Eine monolithische Trennsäule ist erfindungsgemäß ein poröser monolithischer Formkörper, der nach dem erfindungsgemäßen Verfahren durch Abschleifen der äußeren Schicht erzeugt wurde. Die erfindungsgemäβe monolithische Trennsäule kann wie im weiteren beschirieben für chromatographische oder andere Zwecke eingesetzt werden.

Die äußerte Schicht" eines Formkörpers ist die äußere Mantelfläche bzw. der Randbereich des Formkörpers. Diese äußere Schicht ist bei der Herstellung des Formkörpers in direktem Kontakt oder in großer Nähe zu der Gelierförm.

Ein poröser monolithischer Formkörper ist erfindungsgemäß ein Formkörper mit einer mono-, bi- oder oligomodalen Porenstruktur. Typischerweise beträgt das Porenvolumen 50 bis 80% des Volumens des Formkörpers. Bevorzugte. Formkörper weisen eine monomodale Porenstruktur mit Makroporen auf oder besonders bevorzugt eine bimodale oder trimodale Porenstruktur mit Mesound Makroporen. Die untereinander verbundenen Makroporen besitzen bevorzugt einen Durchmesser, der einen Medianwert größer als 0,1 µm aufweist. Der Durchmesser der Mesoporen weist bevorzugt einen Medianwert zwischen 2 und 100 nm auf. Da die erfindungsgemäß bearbeiteten Formkörper bevorzugt für chromatographische Zwecke eingesetzt werden, entsprechen ihre Dimensionen in der Regel den Dimensionen, die für monolithische Chromatographiesäulen üblich sind. Das sind typischerweise Durchmesser zwischen 2 und 25 mm und Längen zwischen 2 cm und 1 m. Je nach Anwendungsgebiet der Trennsäule sind jedoch Abweichungen von diesen Größenangaben möglich. Die Formkörper sind bevorzugt zylindrisch, d.h. säulenförmig, mit kreisförmigen Stirnseiten S und einer Mantelfläche M (siehe Fig. 2), können jedoch für bestimmt Anwendungen auch andere Formen aufweisen. Beispiele sind konische Säulen, Säulen mit mehreckigen Stirnseiten oder quarderförmige Formkörper.

Die Formkörper können aus allen rigiden, porösen Materialien bestehen, die geeignet sind, einen stabilen Formkörper zu bilden, insbesondere können sie aus anorganischen, organischen oder organisch-anorganischen Hybridmaterialien bestehen.

Beispiele für anorganische Materialien sind Silica- Materialien oder Materialien aus anderen Metalloxiden, wie z.B. Aluminium- oder Titan-Oxiden, oder Metalloxid-Mischungen.

Beispiele für organisch- anorganische Hybridmaterialien sind Materialien, die aus einem homogenen dreidimensionalen Netzwerk mit organischanorganischer Hybrid-Struktur bestehen oder anorganische Materialien, die mit mindestens einer Schicht eines organischen Polymers beschichtet sind (auch in den Poren) oder organische Materialien, die mit mindestens einer Schicht eines anorganischen Polymers beschichtet sind (auch in den Poren).

Beispiele für organische Polymere sind insbesondere hochvernetzte Poly(meth)-acrylsäurederivate, Polystyrolderivate, Polyester, Polyamide, Polyethylene oder auch poröse Kohlenstoff- oder Caibon-Materialien.

In einer bevorzugten Ausführungsform bestehen die erfindungsgemäß eingesetzten Formkörper aus anorganischen Materialien, insbesondere Silica-Materialien, oder anorganisch- organischen Hybridmaterialien, insbesondere aus Organoalkoxysilanen oder aus Mischungen von Organoalkoxysilanen und Alkoxysilanen hergestellten Materialien, die in einem Sol-Gel Verfahren erzeugt wurden.

Verfahren zur Herstellung der Formkörper aus anorganischen, organischen oder organisch-anorganischen Hybridmaterialien sind dem Fachmann bekannt (siehe z.B. Ausführungen zum Stand der Technik). Im folgenden werden beispielhaft einige der bekannten Verfahren kurz erläutert:
Erfindungsgemäß werden Förmkörper eingesetzt, die nach einem Sol-Gel Verfahren hergestellt wurden. Derartige Verfahren werden z.B. in EP 0 710219 B1 oder bevorzugt WO 98/29350 beschrieben. In Sol-Gel-Verfahren werden zunächst polymerisierbare niedermolekulare Spezies erzeugt und schließlich über Polymerisations- oder Polykondensationsreaktionen aggregierte oder polymerisierte Materialien erhalten. Die Sol-Gel-Methode eignet sich u. a. zur Anwendung bei der Hydrolyse von Metallalkoholaten, Metallchloriden, Metallsalzen oder Kombinationsverbindungen, die in der Regel Carboxyl- oder beta-Diketon-Liganden enthalten. Ein entsprechendes Verfahren wird auch in EP 0 363 697 beschrieben.

Geeignete Alkoxysilane zur Herstellung von erfindungsgemäß geeigneten Silica- Materialien nach einem Sol-Gel-Verfahren sind Tetraalkoxysilane (RO)₄Si, wobei R typischerweise ein Alkyl, Alkenyl oder Aryl- Rest ist, wie C1 bis C20 Alkyl, C2 bis C20 Alkenyl oder C5 bis C20 Aryl, bevorzugt ein C1 bis C8 Alkylrest. Besonders bevorzugt sind Tetraethoxy- und insbesondere Tetramethoxysilan. Genauso kann das Tetraalkoxysilan verschiedene Alkylreste (R) enthalten.

In einer anderen Ausführungsform können statt eines Alkoxysilans oder Mischungen zweier oder mehrerer Alkoxysilane auch Organoalkoxysilane oder Mischungen von Organoalkoxysilanen mit Tetraalkoxysilanen eingesetzt werden. Auf diese Weise entstehen anorganisch-organische Hybridmaterialien. Geeignete Organoalkoxysilane sind solche, in denen ein bis drei, bevorzugt eine Alkoxygruppen eines Tetraalkoxysilans durch organische Reste, wie bevorzugt C1 bis C20 Alkyl, C2 bis C20 Alkenyl oder C5 bis C20 Aryl ersetzt sind. Weitere Organoalkoxysilane sind z.B. in WO 03/014450. oder US 4,017,528 offenbart.

Statt in ihrer monomeren Form können die Alkoxysilane bzw. Organoalkoxysilane auch vorpolymerisiert als z.B. Oligomere eingesetzt werden.

Bei einem Sol-Gel-Verfahren wird durch Hydrolyse der Edukte, wie z.B. der Alkoxysilane und/oder Organoalkoxysilane, in Gegenwart einer porenbildenden Phase, z. B. einer wässrigen Lösung eines organischen Polymers, ein Gelkörper aufgebaut. Danach wird das Gel gealtert und schließlich die porenbildene Substanz abgetrennt. Je nach der Art der eingesetzten Monomere und gegebenenfalls Porenbildner kann die konkrete Durchführung des Verfahrens variieren.

Bei der Verwendung von Organoalkoxysilanen kann beispielsweise je nachdem welche Porenverteilung der monolithische Formkörper aufweisen soll, auf verschiedene Weise auf die Ausbildung der Poren Einfluss genommen werden.
Beispielsweise kann gegebenenfalls auf die Zugabe eines Porogens wie z.B. Polyethylenglycol verzichtet werden, da manche Organoalkoxysilane durch die organischen, nicht hydrolysierbaren Reste selbst die Ausbildung von makroporösen Strukturen im Formkörper bewirken.

Werden zusätzlich Mesoporen gewünscht, so kann ein Detergenz zugegeben werden (z.B. kationische Detergentien wie CTAB (CH₃(CH₂)₁₅N⁺(CH₃)₃Br⁻), nicht ionische Detergentien wie PEG (Polyethylenglykol), Brij 56 (CH₃(CH₂)₁₅-(OCH₂CH₂)₁₀-OH), Brij 58 (CH₃(CH₂)₁₅-(OCH₂CH₂)₂₀-OH) und Triton^{®} X-Detergentien (CH₃)₃CCH₂CH(CH₃)-C₆H₄O(CH₂CH₂O)ₓH mit x=8 (TX-114) oder x=10 (TX-100) oder Blockcopolymere wie Pluronic^{®} P-123 (EO)₂₀(propylene oxide, PO)₇₀(EO)₂₀ oder Tween^{®} 85 (Polyoxyethylene sorbitan trioleate)) oder aber ein Alterungsverfahren durchgeführt werden wie z.B. in WO 95/03256 und besonders in WO 98/29350 (Zugabe einer thermisch zersetzbaren Substanz wie Harnstoff) offenbart.

Typischerweise wird nach dem Ausgelieren und dem Altern des Gels häufig ein Calzinierungsschritt durchgeführt. Dadurch werden alle im Formkörper verbliebenen organischen Verbindungen oder Reste entfernt. Auch bei dem Einsatz von Organoalkoxysilanen im Monomersol kann im letzten Syntheseschritt calziniert werden, so dass die organischen Reste aus dem Formkörper entfernt werden und ein komplett anorganischer Formkörper erhalten wird. Insbesondere bei der Verwendung von Organoalkoxysilanen mit sterisch großen organischen Resten kann dies zur Erzeugung von Poren genutzt werden. Die Calzinierung erfolgt in der Regel bei Temperaturen zwischen 300 und 600°C.

Genauso ist es aber auch möglich, auf den Calzinierungsschritt zu verzichten oder aber die Temperatur so zu wählen, dass insbesondere beim Einsatz von Organoalkoxysilanen die organischen Reste nicht angegriffen werden. Auf diese Weise besteht die Möglichkeit, durch die organischen Reste die Materialeigenschaften der Formkörper z.B. bezüglich ihrer chromatographischen Trenneigenschaften zu beeinflussen. Typischerweise liegen die Temperaturen in diesem Fall zwischen 100 und 300°C

Entscheidend für die Herstellung entsprechender Säulen ist, dass im gesamten Volumen der hergestellten Monolithen die Poren gleichförmig aber auch homogen verteilt sind. Geeignete Poren bildende chemische Substanzen können z.B. wasserlösliche organische Polymere wie Polyethylenoxid sein, oder Mischungen, bestehend aus einem Polyalkohol und Formamid. Es können auch Mischungen, die Formamid und einen Polyalkohol, wie Ethylenglykol, Glycerin oder Sorbitol als Bestandteile der Poren bildenden Phase enthalten, verwendet werden.

Wenn Siliziumalkoholate als metallorganische Verbindung verwendet werden, wird die Hydrolyse bevorzugt in saurem Medium durchgeführt. Hierzu werden bevorzugt verdünnte Säuren eingesetzt, und zwar Essigsäure oder Salpetersäure in Konzentrationen 1 mmol/l bis 2 mol/l. Es können zu diesem Zweck aber auch andere verdünnte Säuren verwendet werden.

Die Struktur und der Aufbau nach dem Sol=Gel Verfahren hergestellter Formkörper hängen von den gewählten Prozessparametern ab und werden beispielsweise bestimmt durch die eingesetzten Ausgangsmaterialien, Reaktionstemperatur, pH, Art des gegebenenfalls eingesetzten Katalysators, der Menge und des Molekulargewichts des verwendeten organischen Polymers und der verwendeten Lösungsmittel. Es hat sich aber gezeigt, dass unter exakt gleichen Bedingungen reproduzierbare Strukturen erhalten werden.

Die nach EP 0710219 B1 oder bevorzugt WO 98/29350 hergestellten Formkörper haben bevorzugt Strukturen, in denen die miteinander verbundenen Makroporen, je nach gewählten Prozessparametern, im Mittel Durchmesser im Bereich von 0.1 bis 50 µm, bevorzugt von 0.2 bis 20 µm aufweisen. Insbesondere werden die Parameter so gewählt dass Formkörper mit Makroporendurchmessern im Bereich von 0.2 bis 10 µm erhalten werden.

Bevorzugt wird das sich in der hergestellten Säule ergebende Porenvolumen so eingestellt, dass es ca. 50 bis 80 % bezogen auf das Gesamtvolumen beträgt, so dass die Säule eine ausreichende Stabilität für die nachfolgende Schleifbehandlung aufweist und sich während der späteren Anwendung geeignete Druckverhältnisse aufbauen können.

Wie oben schon erwähnt, befinden sich bei den bevorzugten Materialien zusätzlich Mesoporen in den Wänden der Makroporen.. Die Mesoporen besitzen mittlere Durchmesser im Bereich von 2 bis 100 nm. Besonders gute Eigenschaften besitzen Säulen, deren Mesoporen mittlere Durchmesser von im Bereich von 2 bis 50 nm, insbesondere von 5 bis 30 nm, liegen.

Das Verhältnis des Mesoporenvolumens zum Gesamtvolumen der Poren sollte möglichst höher als 10 % sein.

Wie für herkömmliche Chromatographiesäulen bekannt, können auch die erfindungsgemäßen eingesetzten Formkörper oder die Trennsäulen durch funktionelle Gruppen, sogenannte Separationseffektoren, derivatisiert werden, indem diese an der Oberfläche der Poren gebunden werden, oder indem Biomoleküle, z.B. Enzyme, wie Glukoseisomerase, oder Metallkatalysatoren, wie Platin oder Palladium, in den Poren geträgert werden. Die verschiedenen Separationeffektoren, wie beispielsweise ionische, hydrophobe, chelatisierende oder chirale Gruppen, und Methoden zu ihrer Einführung sind dem Fachmann bekannt. Beispiele finden sich z.B. in WO 98/29350.

Geeignete organische Formkörper können nach herkömmlichen Polymerisationsverfahren, z.B. durch radikalische, ionische oder thermische Polymerisation, hergestellt werden. Sie müssen mit einem so hohen Vernetzungsgrad hergestellt werden, dass sie rigide und starr genug sind, um durch das erfindungsgemäße Abschleifen nicht ungewollt verformt oder beschädigt zu werden. Weiterhin können organische Polymerformkörper durch Massepolymerisation von Monomeren in einem Formkörper, einem sogenannten Matrizenformkörper als Gelierform, und anschließendem Herauslösen des Matrizenformkörpers hergestellt werden.

Als Matrizenformkörper, d.h. Gelierform, für das werden typischerweise entsprechend dimensionierte poröse Formkörper aus Kieselgel verwendet, deren Porensystem insbesondere aus Makroporen gebildet wird. Bevorzugterweise besitzen die Formkörper zusätzlich auch Mesoporen in den Wänden der Makroporen. Die untereinander verbundenen Makroporen besitzen typischerweise einen Durchmesser, der einen Medianwert größer als 0,1 µm aufweist. Der Durchmesser der Mesoporen weist im allgemeinen einen Medianwert zwischen 2 und 100 nm auf. Durch die Art der Porosität bzw. der spezifischen Oberfläche des Matrizenformkörpers kann die Porosität und spezifische Oberfläche des einpolymerisierten Formkörpers beeinflusst werden. Die entstehenden erfindungsgemäßen Formkörper können demnach Makroporen und bevorzugt auch Mesoporen der gleichen Größenordungen aufweisen, wie sie für die Matrizenformkörper aufgeführt sind.

Statt eines porösen Formkörpers kann als Matrizenformkörper auch eine Säule oder eine entsprechende Halterung verwendet werden, die mit porösen Partikeln gefüllt ist. In diesem Fall bilden die Partikelzwischenräume üblicherweise Makroporen.

Als Matrizenformkörper werden typischerweise entsprechend dimensionierte poröse Formkörper verwendet, deren Porensystem insbesondere aus Makroporen gebildet wird. Vorzugweise besitzen die Formkörper zusätzlich Mesoporen in den Wänden der Makroporen. Die untereinander verbundenen Makroporen besitzen typischerweise einen Durchmesser, der einen Medianwert größer als 0,1 µm aufweiset. Der Durchmesser der Mesoporen weist im allgemeinen einen Medianwert zwischen 2 und 100 nm auf. Durch die Art der Porosität bzw. der spezifischen Oberfläche des Matrizenformkörpers ist die Porosität und spezifische Oberfläche des einpolymerisierten Formkörpers steuerbar, so dass in folge die entstehenden organischen Formkörper Makroporen und Mesoporen der gleichen Größenordungen aufweisen, wie sie für die Matrizenformkörper aufgeführt sind.

Statt eines porösen Formkörpers kann als Matrizenformkörper auch eine Säule oder eine entsprechende Halterung verwendet werden, die mit porösen Partikeln gefüllt ist. In diesem Fall bilden die Partikeizwischenräume üblicherweise Makroporen.

Um nach erfolgter Polymerisation den Matrizenformkörper entfernen zu können, muss dieser aufgelöst und ausgewaschen werden, ohne das entstandene organische Polymer zu zerstören. Geeignete Matrizenformkörper bestehen aus anorganischen Materialien, wie anorganischen Oxiden, insbesondere Kieselgel. Dies können monolithische Formkörper sein, wie in WO 94/19 687, WO 95/03 256 oder WO 98/29350beschrieben. Sie können kalziniert oder unkalziniert eingesetzt werden, je nach der gewünschten Porosität des herzustellenden organischen Polymers.

Matrizenformkörper aus Kieselgel können mit wässrigen Basen oder mit wässriger Flusssäure ausgewaschen werden. Falls die einpolymerisierten organischen Formkörper unter diesen Bedingungen ebenfalls labil sind, muss ein anderer Matrizenformkörper gewählt werden. Dies kann beispielsweise ein poröser Matrizenformkörper aus einem organischen Polymer sein, das unter Bedingungen ausgewaschen wird, die den einpolymerisierten Formkörper nicht zerstören. So können beispielsweise Polylactide oder Melamin-Phenol-Formaldehydharze eingesetzt werden.

Es lassen sich so verschiedenste organische polymere Formkörper herstellen, die beispielsweise durch radikalische, ionische oder thermische Polymerisation erzeugt werden. Dementsprechend können die erhaltenen Formkörper aus Poly(meth)-acrylsäurederivate, Polystyrolderivaten, Polyestern, Polyamiden oder Polyethylenen bestehen. Die zur Herstellung einzusetzenden Monomere sind dem Fachmann auf dem Gebiet der organischen Polymere bekannt. Beispiele hierfür sind dies monoethylenisch oder polyethylenisch ungesättigte Monomere, wie Vinyl-Monomere, vinylaromatische und vinylaliphatische Monomeren, wie z.B. Styrol und substituierte Styrole, Vinylacetate oder Vinylpropionate, acrylische Monomere, wie Methacrylate und andere Alkylacrylate, Ethoxymethylacrylat und höhere Analoga und die entsprechenden Methacylsäureester oder deren Amide, wie Acrylamid oder Acrylnitril. Weitere monoethylenisch und polyethylenisch ungesättigten Monomere finden sich beispielsweise in EP 0 366 252 oder US 5,858,296.

Der Fachmann ist in der Lage, verschiedene Monomeren gezielt zu kombinieren, gegebenenfalls einen geeigneten Radikalstarter oder Initiator hinzuzufügen und so eine Monomerlösung herzustellen, mit der der Matrizenformkörper aufgefüllt werden kann. Die Polymerisationsdauer und - temperatur ist nach üblichen Regeln auf die jeweilige Monomerlösung abzustimmen.

Nach Beendigung der Polymerisation wird der entstandene solide Formkörper, der beispielsweise aus dem anorganischen Matrizenpolymer und dem abgeformten organischen Polymer besteht, entnommen und das Material des Matrizenformkörpers herausgelöst. Dazu wird der Formkörper in einer Waschlösung, optional unter Erhitzen, gegeben und falls nötig geschwenkt. Eine Behandlung mit wässriger Flußsäure zur Entfernung von Kieselgel dauert typischerweise 48 h.

Nach weiteren Waschschritten zur Entfernung der aggressiven Waschlösung und letzter Partikel erhält man den porösen organischen polymeren Formkörper als Abdruck zum eingesetzten Matrizenformkörper.

In Abhängigkeit von den gewünschten Trenneigenschaften können auch bei Formkörpern aus organischen Polymeren weitere Modifikationen notwendig sein. Soll die Säule z.B. für die Affinitäts- oder lonentausch-Chromatographie eingesetzt werden, muss die Porenoberfläche mit entsprechenden Separationseffektoren belegt sein, sofern geeignete Substanzen nicht bereits der Monomerlösung zugesetzt wurden und so direkt in das Polymer eingeführt worden sind. Bevorzugt erfolgt jedoch die Funktionalisierung erst anschließend entweder direkt mit entsprechenden Separationseffektoren oder und durch Einführung funktioneller Gruppen, die sich dann mit Separationseffektoren umsetzen lassen. Auch können weitere Modifikationen durch Block- öder Pfropfpolymerisationen auf den polymeren Formkörpern eingeführt werden. Separationseffektoren und Monomere, die neben einer polymerisierbaren Doppelbindung noch weitere Funktionalitäten, wie z.B. Oxiranringe, enthalten, sind dem Fachmann bekannt. Beispiele finden sich in WO 96/22316 oder WO 95/10354.

Genauso können geeignete Funktionalitäten der erfindungsgemäßen Formkörper zur Anbindung bzw. Immobilisierung von Biomolekülen, wie beispielsweise Enzymen verwendet werden.

Weiterhin können Formkörper mit besonderen Trenneigenschaften hergestellt werden. Bei der Herstellung eines Formkörpers mithilfe eines Matrizenformkörpers als Gelierform können wie beim "Molecular Imprinting" Templat-Moleküle an die Oberfläche des, in diesem Falle porösen oder unporösen, Matrizenformkörpers gebunden werden. Anschließend werden die Zwischenräume oder Poren mit Monomerlösung ausgefüllt und auspolymerisiert. Während der Polymerisation bilden sich Kavitäten aus, die die Templat-Moleküle umschließen. Dann wird der Matrizenformkörper und die daran gebundenen Templatmoleküle ausgewaschen. Dieses hat den Vorteil, dass durch die Bindung an den Matrizenformkörper die Templatmoleküle eine definiert ausgerichtete Position einnehmen. Es entstehen so definiertere Kavitäten, die bei der chromatographischen Trennung eindeutigere und stärkere Wechselwirkungen eingehen können. Nach der Polymerisation können alle Templatmoleküle ausgewaschen werden. Erst im zweiten Schritt wird die Monomerlösung zugegeben und polymerisiert.

Da die polymeren organischen Formkörper in der Regel unter Verwendung von Gelierformen z.B. in Form von Rohren oder geeigneten anorganischen oder organischen Formkörpem als Matrizenformkörper hergestellt werden, weisen sie ebenso wie die oben beschriebenen anorganischen oder anorganisch-organischen, monolithischen Trennsäulen inhomogene Randbereiche auf, welche die Trennleistung beeinträchtigen. Wie auch bei den anorganischen oder anorganisch-organischen Formkörpern wird der Einfluss der Randbereiche um so größer je geringer der Durchmesser der hergestellten Säule ist.

Überraschend wurde nun gefunden, dass es möglich ist, rigide Formkörper in ihrer Trennleistung für den Einsatz in der Flüssigkeitschromatographie zu verbessern. Dies erfolgt, indem die Randbereiche des Formkörpers durch einen Schleifprozess gleichmässig abgetragen werden. Auf diese Weise wird der Durchmesser der Formkörper verringert. Je nach Art des Schleifverfahrens kann der Durchmesser in einem Schritt oder bevorzugt stufenweise verringert werden. Typischerweise werden pro Schleifstufe Schichtdicken von 5µm bis 100 µm abgetragen, wobei die untere Grenze in der Regel durch den jeweiligen Schleifprozess bzw. die eingesetzte Maschine vorgegeben wird und die Obergrenze durch das Material. Versucht man z.B. bei einem anorganischen Silica-Monolithen mit einer Porosität von ca. 80% zu dicke Schichten (>100 um) abzuschleifen, kommt es häufiger zu Brüchen im Formkörper, die dann den Einsatz des Formkörpers als Chromatographiesäule unmöglich machen.

Wie groß die abgetragene Schichtdicke nach ein- oder mehrmaligem Abschleifen insgesamt ist, hängt von dem Durchmesser des eingesetzten Formkörpers und des gewünschten Durchmessers der späteren Trennsäulen ab. Um störende Randeffekte, die z.B. aus dem Herstellungsprozess des Formkörpers resultieren, effektiv zu beseitigen, sollte der Durchmesser insgesamt um mindestens 5 µm, vorzugsweise um 20µm reduziert werden. Typischerweise erfolgt eine Reduzierung um 20µm bis 4 mm, bevorzugt um 0,02 mm bis 3 mm. Besonders vorteilhaft lässt sich das erfindungsgemäße Verfahren einsetzten, um Trennsäuleh mit einem Durchmesser von unter 6 mm, bevorzugt unter 4 mm herzustellen. Dazu werden in der Regel Formkörper mit einem Ausgangsdurchmesser zwischen 4 und 8 mm eingesetzt. Bevorzugt wird eine gleichmässige Schicht abgetragen, d.h. die Dicke der abgetragenen Schicht ist überall (über den gesamten Umfang des Formkörpers) gleich groß. Es ist jedoch auch möglich, ungleichmässig dicke Schichten abzutragen, d.h. z.B. an einer Seite der Mantelfläche eine dickere Schicht.

Besonders bevorzugt ist erfindungsgemäß ein spitzenloser Abschleifprozess, bei dem der Durchmesser der Formkörper stufenweise mit Hilfe von rotierenden Schleifscheiben um jeweils einige zehntel Millimeter verringert wird. Nach gängigen Erfahrungen würde der Fachmann nun davon ausgehen, dass während dieses Prozesses freigesetztes, abgetragenes Material während des Schleifprozesses auf die Randbereiche der so behandelten Trennsäulen einwirkt und die äußere Porenstruktur nachteilig beeinflusst. Es wurde jetzt jedoch gefunden, dass erfindungsgemäß hergestellte monolithische Trennsäulen deutlich bessere chromatographische Trennergebnisse liefern im Vergleich zu Trennsäulen, die nach herkömmlichen Methoden direkt im Sol-Gel-Verfahren mit dem gewünschten geringen Durchmesser hergestellt worden sind.

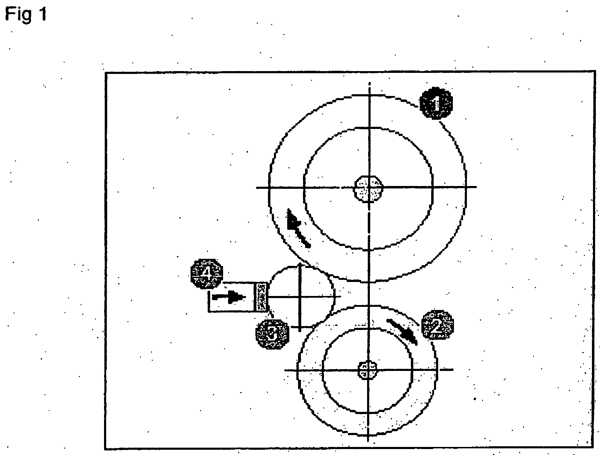

Der eigentliche Schleifprozess wird bevorzugt auf einer Schleifmaschine durchgeführt, die eine Schleifscheibe (1) und eine Regelscheibe (2), durch die das Werkstück (3) gedreht wird, sowie einen Einstechschlitten bzw. Zuführschlitten (4) aufweist, wobei letzterer während des Schleifprozesses in den Spalt geführt werden kann, der zwischen der sich drehenden Schleifscheibe (1) und der sich gegenläufig drehenden Regelscheibe (2) entsteht. Das Werkstück (3) wird während des Schleifens von dem Zuführschlitten (4) gehalten. Die Weite des Spalts zwischen Schleifscheibe (1) und Regelscheibe (2) ist sehr fein regelbar. Hierdurch ist es möglich, Werkstücke, die mit dem Zuführschlitten (4) in den Spalt positioniert werden, auf nm genau zu schleifen. Während des Schleifens dreht sich die Schleifscheibe (1) schneller als die Regelscheibe. Da das Werkstück (3) auf dem Zuführschlitten (4) von der Regelscheibe (2) gedreht wird, dreht es sich wiederum langsamer als die Schleifscheibe (1). Hierdurch erfolgt ein Materialabtrag. Spitzenloses Abschleifen bedeutet also, dass es an den Enden des Werkstücks keine Halterung gibt. Schematisch ist das Grundprinzip des "spitzenlosen Schleifens" in Fig. 1 dargestellt. Um zu vermeiden, dass feinste, abgeschliffene Materialteilchen erneut mit dem zu bearbeitenden Monolithen als Werkstück wieder in Kontakt kommt ist oberhalb dem Spalts zwischen Schleifscheibe (1) und Regelscheibe (2) eine Absaugvorrichtung angebracht. Während des Schleifens wird durch die Absaugvorrichtung ein stetiger Luftstrom erzeugt, wodurch abgetragene, bewegliche feine Teilchen umgehend entfernt werden. Darüber hinaus ist über der Oberfläche der Schleifscheibe in gegenüber liegender Position zu dem zugeführten Werkstück eine weitere Saugvorrichtung angebracht, die kontinuierlich von der Oberfläche der Schleifscheibe (1) anhaftende Teilchen absaugt. Auf diese Weise kann erfolgreich vermieden werden, dass von den zu bearbeitenden Monolithen abgetragenes, feinteiliges Material wieder an die Oberfläche des Werkstücks gelangt und mit den freigelegten Poren nachteilig in Wechselwirkung tritt. Durch geeignete Regulierung des Verhältnisses der Umdrehungszahlen der Schleifscheibe (1) und der Regelscheibe(2) zueinander, ist es in einfacher Weise möglich, geringste Schichten von der äußeren Oberfläche des Formkörpers abzutragen, ohne die Porenstruktur zu beschädigen und ohne Gefahr zu laufen, dass aus der Oberfläche unregelmäßig kleine Areale beschädigt oder herausgebrochen werden.

Während des Schleifprozesses wird der Formkörper als Werkstück kontinuierlich mit dem Zuführschlitten (4) durch den Spalt vorgeschoben, wobei der Formkörper frei drehbar auf dem Zuführschlitten liegt. Durch eine exakt einstellbare Halterung des Zuführschlittens wird dabei gewährleistet, dass der Monolith über die gesamte Länge hinweg gleichmäßig dem Schleifort zugestellt und abgeschliffen wird. Gleichzeitig wird ein Brechen des Formkörpers vermieden, weil er über die gesamte Länge im Zuführschlitten aufliegt.

Um gute Schleifergebnisse zu erhalten, empfiehlt es sich z.B. einen nach dem Sol-Gel-Verfahren hergestellten monolithischen Formkörper in mehreren Schritten auf den gewünschten geringen Durchmesser abzuschleifen und dabei jeweils Schichten von höchsten wenigen µm Dicke abzutragen. Erfahrungsgemäß werden um so bessere Schleifergebnisse erzielt, je dünner die abgeschliffenen Schichten sind.

Weitere Versuche zeigten überraschender Weise, dass nicht nur durch den beschriebenen spitzenlosen Abschleifprozess störende äußere Randbereiche abgetragen werden können und so der Durchmesser der monolithischen Trennsäulen verringert werden kann, sondern dass auch andere Schleifmethoden zu einem entsprechenden Ergebnis führen können, wenn unter geeigneten Zuführungsbedingungen in mehreren Schritten äußerlich sehr dünne Schichten von den hergestellten monolithischen Trennsäulen äußerlich abgetragen werden. Wesentlich ist dabei jeweils, dass mit äußerst geringem Druck gearbeitet werden muss und der Formkörper über die gesamte Länge gleichmäßig auf einer Unterlage aufliegt, so dass keine Hebelkräfte wirken können, die zu einem Brechen des Monolithen führen würden. Außerdem ist es vorteilhaft, gleich welches Schleifverfahren angewendet wird, während des Abschleifens entstehende Partikel durch Absaugen möglichst sofort nach der Entstehung von der Oberfläche des behandelten Formkörpers zu entfernen und dadurch ein Festsetzen in den äußeren Poren zu verhindern.

Erfindungsgemäß ist daher die Verringerung des Durchmessers eines entsprechenden monolithischen Formkörpers in einer entsprechend ausgerüsteten Rundschleifmaschine, die eine äußerst feine Einstellung erlaubt, durch Rundschleifen zwischen Spitzen durchführbar.

Unter Berücksichtigung des empfindlichen Aufbaus der monolithischen Formkörper besteht eine andere Möglichkeit darin, durch Drehen zwischen Spitzen unter Einsatz einer Drehmaschine dünne äußere Schichten abzutragen und auf diese Weise erfindungsgemäß Trennsäulen mit über den gesamten Querschnitt identischen Eigenschaften herzustellen.

Beim Drehen handelt es sich um ein spanendes Verfahren mit geometrisch bestimmter Schneide. Im Allgemeinen wird die Drehbewegung durch das Werkstück, in unserem Fall durch die Drehbewegung des Monolithen, durchgeführt. Der Monolith ist dabei fest eingespannt und wird an der zu bearbeitenden Fläche entlang geführt und wird dabei rundgedreht. Für diesen Zweck geeignete Drehmaschinen können im Handel erworben werden und lassen sich vom Fachmann mit geeigneten Halte- und Absaugvorrichtungen ausstatten.

Darüber hinaus wurde gefunden, dass an sich alle Methoden zur Verringerung des Durchmessers durch Abtragen dünnster äußerer Schichten des Monolithen geeignet sind, um aus einer herkömmlich hergestellten, stabil vernetzten, organischen oder anorganischem monolithischen Formkörpern oder Formkörpern aus Hybrid-Materialien erfindungsgemäße monolithische Trennsäulen mit verbesserten Trenneigenschaften herzustellen.

In diesem Sinn sind auch Methoden zum Kernlochbohren einsetzbar, wobei das Werkstück, hier ein Monolith, ringförmig zerspant wird und neben dem Bohrloch ein zylindrischer Kern, hier die organische oder anorganische monolithische Trennsäule mit verringertem Durchmesser, zurückbleibt. Dieses hat den Vorteil, dass als Ausgangswerkstück ein entsprechender Formkörper mit Abmessungen verwendet werden kann, welche die Handhabung erleichtern. Aber auch in diesem Fall ist es von Vorteil, wenn sich der ursprüngliche Durchmesser nur um wenige mm von dem gewünschten unterscheidet.

Weiterhin ist es möglich, dünne äußere Schichten manuell oder durch entsprechende Geräte unterstützt mit Schleifpapier abzuschleifen. Auch in diesem Fall ist es von Vorteil das Abschleifen unter Absaugung des abgetragenen Materials durchzuführen. Zu diesem Zweck werden nacheinander dünne Schichten mit Schleifmedien unterschiedlicher Körnung abgetragen, beginnend mit der gröbsten Körnung. Es versteht sich von selbst, dass wie bei allen vorher beschriebenen Methoden äußerst sensibel und feinfühlig gearbeitet werden muss und dabei das zu bearbeitende Werkstück sicher auf einer Unterlage gebettet sein muss.

Mechanisch kann dieser Vorgang auch mit einem Bandschleifer durchgeführt werden, wenn er eine geeignete Haltevorrichtung für die zu bearbeitenden Formkörper aufweist und mit einer Absaugung versehen ist.

Wenn der Abschleifvorgang abgeschlossen ist, empfiehlt es sich unabhängig von der Schleifmethode, die erhaltene monolithische Säule noch einmal in einem geeigneten Lösungsmittel, wie z. B. Wasser, Alkohol, Äther oder dergleichen zu waschen und von eventuell noch anhaftenden Partikeln zu befreien.

Im Anschluss an das Abschleifen kann durch Ummanteln aus dem erhaltenen Röhling eine gebrauchsfertige Chromatographiesäule hergestellt werden. Das Ummanteln kann nach bekannten Methoden erfolgen. Geeignete Halterungen und Ummantelungen sind für anorganische monolithische Sorbentien z.B. bekannt aus WO 98/59238 und WO 01/03797. Geeignete Ummantelungen mit Kunststoffen können z.B. aus PEEK oder faserverstärktem PEEK bestehen.

Erfindungsgemäß bedeutet der Begriff "Ummanteln" jede Art von Verarbeitung, mit der ein poröser monolithischer Formkörper derart flüssigkeitsdicht abgeschlossen werden kann, dass er von einer der Stirnseiten aus mit Flüssigkeit durchströmt werden kann, ohne dass die Flüssigkeit seitlich aus der Mantelseite des z.B. Zylinders heraustritt. Vielmehr wird der Formkörper in Längsrichtung völlig durchströmt und die Flüssigkeit tritt auf der anderen Stirnseite wieder heraus. Weiterhin sollte die Ummantelung insbesondere für chromatographische Zwecke möglichst totvolumenarm sein. Das bedeutet, dass die Ummantelung an der Mantelseite des Formkörpers möglichst dicht anliegt.

Demgemäss ist eine Ummantelung z.B. eine Druckhalterung, in die der Formkörper eingespannt werden kann, ein Druckmantel, eine Kartuschen-Halterung oder eine herkömmliche Säulenummantelung aus z.B. Metall oder bevorzugt Kunststoff, die beispielsweise auf den Formkörper aufgeschrumpft werden kann oder in die der Formkörper eingegossen oder eingesintert werden kann.

Besonders vorteilhaft sind besonders torvolumenarme Ummantelungen, wie sie in WO 01/77660 A1 beschrieben sind. Nach diesem Verfahren werden in einem ersten Schritt aus geeigneten Kunststoffen, denen gegebenenfalls Fasermaterialien zugesetzt werden, durch Extrusion oder Spritzguss dünne Rohre mit einem entsprechend geringen Innendurchmesser hergestellt. In diese dünnen Rohre werden anschließend die abgeschliffenen monolithischen Chromatographiesäulen eingeführt. Durch Erwärmen und Aufschrumpfung wird das jeweilige Rohr dann in möglichst engen Kontakt mit dem Formkörper gebracht, so dass eine totvolumenarme Urhmantelung entsteht. Nur Materialien mit einer geeigneten Viskosität lassen sich ausreichend dicht an den Formkörper anfügen. Vorteilhaft ist in diesem Schritt die Verwendung von homogenen Rohren, die über die gesamte Länge eine gleichmäßige Wandstärke aufweisen. In der Patentanmeldung in WO 01/77660 A1 sind sowohl für diesen Zweck geeignete Kunststoffzusammensetzungen als auch Verfahren zur Herstellung der Ummantelungen beschrieben. Entsprechend kann auch hier verfahren werden. Es sind aber auch andere Methoden der Ummantelung als hier beschrieben einsetzbar. Wesentlich für ein gutes Trennverhalten ist unabhängig von der Ummantelungsmethode, dass die Bildung von Totvolumen unterdrückt wird, das das Trennverhalten der Säulen nachteilig beeinflussen würde.

Nachdem die ummantelten Chromatographiesäulen mit verringertem Durchmesser mit geeigneten Anschlussstücken, Filtern, Dichtungen etc. versehen worden sind, können sie in der gewünschten insbesondere chromatographischen Anwendung eingesetzt werden.

Weiterhin können die erfindungsgemäßen Formköper auch mit oder ohne Ummantelung für andere Zwecke, wie z.B. als Katalysatorträger in katalytischen Prozessen, als Katalysator oder Reaktionspartner in Durchflußsynthesen oder für die Festphasenextraktion (Solid Phase Extraction oder Solid Phase Microextraction) eingesetzt werden.

Das erfindungsgemäße Verfahren bietet erstmals die Möglichkeit, Inhomogenitäten in den Randbereichen der Mantelfläche, die insbesondere durch die Herstellung in einer Gelierform entstehen, auf einfache und effektive Weise zu beseitigen. Überraschenderweise wird die Mantelfläche durch das Abschleifen nicht derart verändert, dass bei Einsatz in der Chromatographie schlechtere Trennleistungen entstehen. Vielmehr verbessert sich die Trennleistung einer abgeschliffenen Säule.

Untersuchungen der erfindungsgemäß hergestellten monolithischen Trennsäulen haben gezeigt, dass sie über den gesamten Querschnitt und die gesamte Länge hinweg homogene physikalische Eigenschaften aufweisen. Es wurde gefunden, dass auch nach erfolgter Ummantelung die äußeren Poren ihre Struktur beibehalten haben. Sie werden weder durch den Schleifvorgang noch durch den Ummantelungsprozess nachteilig beeinflusst.

Die erfindungsgemäßen ummantelten monolithischen Chromatographiesäulen zeigen hervorragende Trenneigenschaften. Auch nach Lagerung in Lösungsmitteln und häufiger Benutzung zeigt sich keine oder nur geringfügige Verschlechterung der Trennleistungen. Somit gewährleistet das erfindungsgemäße Verfahren insbesonderedie Herstellung von Chromatographiesäulen zur Auftrennung von kleineren Flüssigkeitsmengen.

Zur Ausführung der vorliegenden Erfindung können den im folgenden. gegebenen Beispielen nähere Einzelheiten entnommen werden.

Auch ohne weitere Ausführungen wird davon ausgegangen, dass ein Fachmann anhand der obigen Beschreibung und der gegebenen Beispiele die vorliegende Erfindung im weitesten Umfang ausführen und nutzen kann.

Zum besseren Verständnis und zur Verdeutlichung der Erfindung werden ergänzend im folgenden Beispiele gegeben, die im Rahmen des Schutzbereiches der vorliegenden Erfindung liegen. Diese bevorzugten speziellen Ausführungsformen sind nur beispielhaft und sind nicht dazu geeignet, die vorliegende Erfindung hierauf zu beschränken.

Die vollständige Offenbarung aller in dieser Anmeldung aufgeführten Anmeldungen und Veröffentlichungen werden darüber hinaus hiermit durch Bezugnahme in diese Anmeldung eingeführt.

### Beispiele

### Beispiel 1

### Erstellung eines monolithischen Formkörpers

In einem ersten Schritt werden 0.70 g Polyethylenoxid (Artikelnr. 85645-2, der Firma Aldrich, Molekulargewicht: 10000) in einer 0. 001 mol/l wässrigen Essigsäurelösung gelöst. Mit dieser Lösung werden unter Rühren 5 ml Tetramethoxysilan vermischt, um eine Hydrotysereaktion hervorzurufen. Nach einigen Minuten Rühren, wird die entstandene klare Reaktionslösung in ein geeignetes, verschließbares Gefäß umgefüllt und konstant bei einer Temperatur von 40 °C gehalten. Die Reaktionslösung verfestigt sich nach etwa 40 Minuten.

Das verfestigte Produkt lässt man bei gleichbleibender Temperatur für einige Stunden stehen. Anschließend lässt man es drei Tage lang bei 40 °C in einer wässrigen 0,1-molaren Ammoniaklösung eingetaucht stehen, wobei die Lösung kontinuierlich nach und nach ausgetauscht wird. Der pH-Wert der Ammoniaklösung beträgt dabei etwa 10. Im Anschluss an diese Behandlung wird das erhaltene Gel bei 60 °C getrocknet und dann auf eine Temperatur von 600 °C erhitzt. Das Erhitzen erfolgt dabei so langsam, dass sich die Temperatur in einer Stunde höchstens um 100 °C pro Stunde erhöht. Auf diese Weise bildet sich aus dem porösen Material amorphes Kieselgel, bzw ein Silica Monolith.

Durch elektronenmikroskopische Untersuchungen kann gezeigt werden, dass ein Produkt mit gleichmäßigen, untereinander verbundenen Makroporen einer Größe von etwa 1,6 µm (1600 nm) hergestellt worden ist. Außerdem kann durch Stickstoffadsorption gezeigt werden, dass in den Makroporen kleinere Poren, sogenannte Mesoporen, mit einem Durchmesser von etwa 10 nm vorhanden sind.

Durch Variation der Temperatur während des Austauschs der Essigsäurelösung gegen Ammoniaklösung kann Einfluss auf die Größe der Mesoporen genommen werden, und zwar indem die Temperatur auf einen Wert zwischen 25 und 60 °C eingestellt wird, während die übrigen Herstellungsbedingungen unverändert bleiben. Während die Makroporen unverändert bleiben, lässt sich so die Größe der Mesoporen im Bereich von 6 bis 13 nm variieren. Je höher die Temperatur während des Lösungsmittelaustauschs gewählt wird, desto größere Mesoporen bilden sich.

### Beispiel 2

3 Silica Monolithen mit einem Durchmesser von 7.2 mm und einer Länge von ca 14.5 cm, hergestellt wie in Beispiel 1 beschrieben, werden mittels spitzenlosen Rundschleifens in mehreren Schleifschritten auf den Durchmesser von 4.6 mm reduziert.

Die so erhaltenen monolithischen Säulen werden in ein PEEKrohr gegeben über das noch ein Teflonschrumpfschlauch gezogen wird. (̵Die Ummantelung erfolgt nach einem bekannten Verfahren, wie in EP 1269179 A1 beschrieben, mit einem lösungsmittel- und mechanisch stabilen Polymer.)̵ Anschließend wird das erhaltene Produkt in einem Ofen auf ca. 400°C erhitzt. Nach Herausnahme aus dem Ofen erfolgt durch die Abkühlung ein Schrumpfen des Teflonschlauches. Hierbei wird das geschmolzene PEEK auf den Kieselgelmonolithen totvolumenfrei gedrückt. Die Trennsäulen werden dann chromatographisch im Adsorptionssystem mit Heptan/ Dioxan (95/5;v/v) und 2-Nitroanisol untersucht.

Es wurden folgende Trennleistungen und Peaksymmetrien erhalten

| | Trennleistung N/m | Peaksymmetrie Tusp |
|---|---|---|
| Säule 1 | 120520 | 1.03 |
| Säule 2 | 127070 | 0.97 |
| Säule 3 | 122960 | 1.06 |

### Beispiel 3:

3 Silica Monolithen mit einem Durchmesser von 7.2mm und einer Länge von 12.5cm, hergestellt wie in Beispiel 1 beschrieben, werden mittels einer spitzenlosen Rundschleifmaschine auf den Durchmesser von 4.6mm reduziert. Anschliessend werden sie in einer 20%igen Lösung von N.N-diethylamino dimethyl octadecylsilan in Toluol für 17 Std. unter Rückfluss gekocht und im Soxhlet mit n-Heptan gewaschen. Nach dem Trocknen werden die Monolithen erneut in 100% Hexamethyldisilazan (HMDS) unter Rückfluss für 17 Std. gekocht, erneut ausgewaschen. Die derivatisierten RP-18 Monolithen (4.6mm im Durchmesser) werden mit bestehenden Verfahren, wie in EP 1269179 A1offenbart, mit einem lösungsmittel- und mechanischstabilen Polymer ummantelt wie in Beispiel 2 beschrieben und chromatographisch im Reversed Phase Mode mit Acetonitril/Wasser (60/40;v/v) und Anthracen untersucht. Es wurden folgende Trennleistungen und Peaksymmetrien erhalten

**346B**

| | Trennleistung N/m | Peaksymmetrie Tusp |
|---|---|---|
| Säule 1 | 81510 | 1.52 |
| Säule 2 | 104930 | 1.57 |
| Säule 3 | 86610 | 1.39 |

### Beispiel 4:

3 Silica Monolithen mit einem Durchmesser von 4.6mm und einer Länge von 12.5cm, hergestellt wie in Beispiel 1 beschrieben, werden mittels einer spitzenlosen Rundschleifmaschine auf den Durchmesser von 3mm reduziert. Die so erhaltenen monolithischen Säulen wurden mit bestehenden Verfahren, wie in EP 1269179 A1 offenbart, mit einem lösungsmittel- und mechanischstabilen Polymer ummantelt und chromatographisch im Adsorptionssystem mit Heptan/ Dioxan (95/5;v/v) und 2-Nitroanisol untersucht. Es wurden folgende Trennleistungen und Peaksymmetrie erhalten

| | Trennleistung N/m | Peaksymmetrie Tusp |
|---|---|---|
| Säule 1 | 102910 | 1.05 |
| Säule 2 | 106290 | 0.99 |
| Säule 3 | 111500 | 1.06 |

Im Verhältnis dazu erhält man bei Silica Monolithen, die direkt nach dem in Beispiel 1 beschriebenen Verfahren mit einem Durchmesser von 3 mm hergestellt wurden, schlechtere Trennleistungen und TUSP Werte.

### Beispiel 5:

3 Silica Monolithen mit einem Durchmesser von 4.6mm und einer Länge von 12.5cm, hergestellt wie in Beispiel 1 beschrieben, werden mittels einer spitzenlosen Rundschleifmaschine auf den Durchmesser von 2mm reduziert. Die so erhaltenen monolithischen Säulen wurden mit bestehenden Verfahren, wie in EP 1269179 A1 offenbart, mit einem lösungsmittel- und mechanischstabilen Polymer ummantelt und chromatographisch im Adsorptionssystem mit Heptan/ Dioxan (95/5;v/v) und 2-Nitroanisol untersucht. Es wurden folgende Trennleistungen und Peaksymmetrien erhalten

| | Trennleistung N/m | Peaksymmetrie Tusp |
|---|---|---|
| Säule 1 | 76170 | 1.08 |
| Säule 2 | 66727 | 1.04 |
| Säule 3 | 67582 | 1.01 |

## Patentansprüche

1. Verfahren zur Herstellung monolithischer Trennsäulen durch
a) Bereitstellen eines porösen monolithischen Formkörpers im Sol-Gel-Verfahren, der inhomogene Randbereiche aufweist
b) Reduktion des Durchmessers des Formkörpers um mindestens 5 µm durch ein- oder mehrfaches Abschleifen der äußeren Schicht.

2. Verfahren nach Anspruch 1, **dadurch gekennzeichnet, dass** der Durchmesser des bereitgestellten porösen monolithischen Formkörpers in Schritt b) um mindestens 20 µm durch ein-oder mehrfaches Abschleifen der äußeren Schicht reduziert wird.

3. Verfahren gemäß Anspruch 1oder 2, **dadurch gekennzeichnet, dass** im Anschluß an Schritt b) in einem Schritt c) der abgeschliffene Formkörper flüssigkeitsdicht ummantelt wird.

4. Verfahren nach einem oder mehreren der Ansprüche 1 bis 3, dadurch gekenntzeichnet, dass in Schritt b) der Durchmesser des Formkörpers . in einem spitzenfreien Abschleifprozess reduziert wird.

5. Verfahren nach einem oder mehreren der Ansprüche 1 bis 3, **dadurch gekennzeichnet, dass** in Schritt b) der Durchmesser des Formkörpers mit Hilfe von rotierenden Schleifscheiben verringert wird.

6. Verfahren nach einem oder mehreren der Ansprüche 1 bis 3, **dadurch gekennzeichnet, dass** in Schritt b)der Durchmesser des Formkörpers durch Rundschleifen zwischen Spitzen reduziert wird.

7. Verfahren nach einem oder mehreren der Ansprüche 1 bis 3, **dadurch gekennzeichnet, dass** in Schritt b) der Durchmesser des Formkörpers auf einer Drehmaschine durch Drehen zwischen Spitzen reduziert wird.

8. Verfahren nach einem oder mehreren der Ansprüche 1 bis 7, **dadurch gekennzeichnet, dass** in Schritt b) der Durchmesser des Formkörper stufenweise um insgesamt 0.1 bis 3 mm reduziert wird.

9. Verfahren nach einem oder mehreren der Ansprüche 1 bis 7, **dadurch gekennzeichnet, dass** in Schritt a) ein monolithischer Förmkörper bereitgestellt wird, der in einer Gelierform hergestellt wurde.

10. Verfahren nach einem oder mehreren der Ansprüche 1 bis 9, **dadurch gekennzeichnet, dass** in Schritt a) ein monolithischer Formkörper mit einem Durchmesser zwischen 4 und 8 mm eingesetzt wird.

## Claims

1. Process for the production of monolithic separating columns by
a) provision of a porous monolithic moulding which has inhomogeneous peripheral regions in a sol-gel process
b) reduction in the diameter of the moulding by at least 5 µm by grinding off the outer layer one or more times.

2. Process according to Claim 1, **characterised in that** the diameter of the porous monolithic moulding provided is reduced in step b) by at least 20 µm by grinding off the outer layer one or more times.

3. Process according to Claim 1 or 2, **characterised in that** the ground-off moulding is clad in a liquid-tight manner in a step c) following step b).

4. Process according to one or more of Claims 1 to 3, **characterised in that** the diameter of the moulding is reduced in step b) in a centreless grinding process.

5. Process according to one or more of Claims 1 to 3, **characterised in that** the diameter of the moulding is reduced in step b) with the aid of rotating grinding wheels.

6. Process according to one or more of Claims 1 to 3, **characterised in that** the diameter of the moulding is reduced in step b) by cylindrical grinding between centres.

7. Process according to one or more of Claims 1 to 3, **characterised in that** the diameter of the moulding is reduced in step b) on a lathe by turning between centres.

8. Process according to one or more of Claims 1 to 7, **characterised in that** the diameter of the moulding is reduced stepwise in step b) by a total of 0.1 to 3 mm.

9. Process according to one or more of Claims 1 to 7, **characterised in that** a monolithic moulding which has been produced in a gelling mould is provided in step a).

10. Process according to one or more of Claims 1 to 9, **characterised in that** a monolithic moulding having a diameter between 4 and 8 mm is employed in step a).

## Revendications

1. Procédé pour la fabrication de colonnes de séparation monolithiques au moyen de :
a) la fourniture d'un moulage monolithique poreux qui comporte des régions périphériques non homogènes selon un procédé sol-gel ; et
b) la réduction du diamètre du moulage d'au moins 5 µm en enlevant par meulage la couche externe une ou plusieurs fois.

2. Procédé selon la revendication 1, **caractérisé en ce que** le diamètre du moulage monolithique poreux fourni est réduit au niveau de l'étape b) d'au moins 20 µm en enlevant par meulage la couche externe une ou plusieurs fois.

3. Procédé selon la revendication 1 ou 2, **caractérisé en ce que** le moulage meulé est gainé d'une manière étanche aux liquides au niveau d'une étape c) qui suit l'étape b).

4. Procédé selon une ou plusieurs des revendications 1 à 3, **caractérisé en ce que** le diamètre du moulage est réduit au niveau de l'étape b) selon un procédé de meulage sans centre.

5. Procédé selon une ou plusieurs des revendications 1 à 3, **caractérisé en ce que** le diamètre du moulage est réduit au niveau de l'étape b) à l'aide de la rotation de meules.

6. Procédé selon une ou plusieurs des revendications 1 à 3, **caractérisé en ce que** le diamètre du moulage est réduit au niveau de l'étape b) par meulage cylindrique entre des centres.

7. Procédé selon une ou plusieurs des revendications 1 à 3, **caractérisé en ce que** le diamètre du moulage est réduit au niveau de l'étape b) sur un tour en tournant entre des centres.

8. Procédé selon une ou plusieurs des revendications 1 à 7, **caractérisé en ce que** le diamètre du moulage est réduit par pas au niveau de l'étape b) sur un total de 0,1 à 3 mm.

9. Procédé selon une ou plusieurs des revendications 1 à 7, **caractérisé en ce qu'**un moulage monolithique qui a été produit dans un moule gélifiant est fourni au niveau de l'étape a).

10. Procédé selon une ou plusieurs des revendications 1 à 9, **caractérisé en ce qu'**un moulage monolithique qui présente un diamètre entre 4 et 8 mm est utilisé au niveau de l'étape a).
